# EUROPEAN PATENT SPECIFICATION

(11) **EP 3 478 986 B1**
(45) Date of publication and mention of the grant of the patent: **29.04.2020**
(21) Application number: 17749520.7
(22) Date of filing: 28.06.2017
(51) Int. Cl.: F16F 9/53, F16F 13/14, F16F 13/30

(54) **MOUNT FOR DAMPING OSCILLATIONS**
HALTERUNG ZUR DÄMPFUNG VON SCHWINGUNGEN
SUPPORT PERMETTANT D'AMORTIR DES OSCILLATIONS

(30) Priority: 29.06.2016 IT UA20164766
(43) Date of publication of application: 08.05.2019
(73) Proprietor: F.I.B.E.T. S.p.A., 10024 Moncalieri (IT)
(72) Inventor: VISCONTE, Giovanni, 10137 Torino (IT)
(74) Representative: Monelli, Alberto
(86) International application number: PCT/IB2017/053857
(87) International publication number: WO 2018/002833

(56) References cited:
- DE-A1- 4 120 099
- DE-A1- 10 329 982
- DE-A1- 19 961 714
- JP-A- S5 965 634
- US-A1- 2004 154 524

## Description

### Technical field

The present invention concerns a mount for damping oscillations, in particular a hydraulic mount. This component can be applied, for example, to contribute in connecting the engine to the chassis of a road vehicle, but it can also have many other applications.

### Background art

Hydraulic mounts as such are known and are characterised by the presence of an incompressible fluid (e.g. water and glycol) which, following stresses on the mount, moves between a first and a second chamber through a narrow conduit. Such a hydraulic mount is described in the document DE10329982.

The common feature to all hydraulic mounts is the capacity to obtain a dynamic stiffening and a drastic increase in damping at a specific frequency.

For example, they allow an increase in rigidity in the event of stresses induced by movement such as a sudden swerve or slamming on the brakes while maintaining at the same time excellent damping for stresses such as the vibrations induced by a running engine.

Hydraulic mounts are typically distinguished as bushings (wherein there is mainly or exclusively radial application of the load) and cones (wherein there is mainly or exclusively axial application of the load).

Each hydraulic mount has a predetermined response to stresses deriving from the geometry thereof. Different types of mounts are known which, according to the geometry, offer different responses to stresses. In consideration of the specific requirement, designers therefore choose the most appropriate mount.

### Disclosure of the invention

In this context, the technical task underpinning the present invention is to provide a hydraulic mount that offers maximum operating flexibility allowing its response to be modulated over time, according to desired parameters.

The defined technical task and the specified aims are substantially achieved by a hydraulic mount, comprising the technical characteristics set forth in one or more of the appended claims.

### Brief description of drawings

Further characteristics and advantages of the present invention will become more apparent from the approximate and thus non-limiting description of a preferred, but not exclusive, embodiment of a mount, as illustrated in the accompanying drawings, of which:
- figure 1 illustrates a detail of a mount according to the present invention;
- figures 2, 3, 4 show a perspective view and according to two orthogonal sections of an embodiment according to the present invention;
- figure 5 shows a detail of a component of the mount of figures 2, 3, 4;
- figure 6 shows a sectional view of a further embodiment according to the present invention;
- figures 7 and 8 show respectively the modulus and phase of the dynamic rigidity of the mount according to the frequency of the stress.

### Detailed description of preferred embodiments of the invention

In the accompanying figures, reference number 1 denotes a mount for damping oscillations.

Such mount 1 comprises a first chamber 40 deformable under the action of said oscillations. The mount 1 also comprises a second chamber 5; appropriately, also the second chamber 5 is at least in part deformable.

The mount 1 further comprises a conduit 60 that sets the first and the second chamber 40, 5 into communication. The conduit 60 is a narrow passage that is interposed between the first and the second chamber 40, 5.

Appropriately, the mount 1 comprises an incompressible fluid suitable for moving between the first and the second chamber 40, 5 through the conduit 60.

The fluid is a magnetorheological fluid. A magnetorheological fluid is a material that displays a change in rheological behaviour following the application of a magnetic field. The application of a magnetic field and the intensity thereof are therefore able to substantially change, in a reversible way, the viscosity of a similar fluid (whereas the density is not changed).

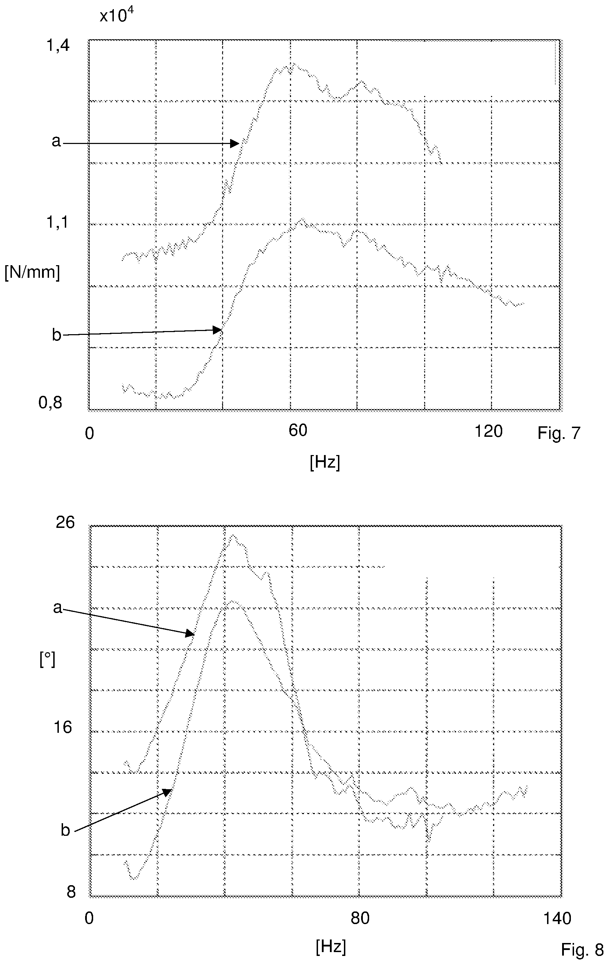

The mount 1 comprises a means 12 for exciting a magnetic field forexciting the magnetorheological fluid. It is part of the means 11 for regulating the dynamic behaviour of the mount 1 itself. Dynamic behaviour means the response of the mount 1 to the dynamic vibrations and stresses received. With a low energy value supplied, magnetorheological fluids allow a consistent variation in viscosity to be obtained; furthermore, the change in viscosity is almost instantaneous, in the order of a few milliseconds. The interesting aspect is that the change in the viscosity of the fluid determines a change in the response of the mount 1 to stresses while maintaining the geometry of the mount 1 unaltered. Figures 7 and 8 show the modulus and phase of the dynamic rigidity of the mount, respectively, as a function of the frequency of the stress; the curves indicated by reference "a" relate to a higher viscosity value, and the curves indicated by reference "b" relate to a lower viscosity value.

Appropriately, magnetorheological fluids comprise ferromagnetic particles suspended in a carrier fluid, very often an organic solvent or water. The ferromagnetic nano-particles are coated by a surfactant to prevent them caking. A non-binding example of a magnetorheological fluid is MR Fluid MRF-132DG Lord Corporation.

The means 12 for generating a magnetic field for exciting the magnetorheological fluid may comprise a first electromagnetic circuit. It therefore allows an active mount 1 to be obtained in which the response of the mount 1 can be modified as a function of the commands imparted by the means 12 for generating a magnetic field. Such commands could be imparted, for example, as a function of detections made by one or more sensors.

The means 12 for generating a magnetic field for exciting the magnetorheological fluid comprises a first bobbin 121 that, in turn, comprises a plurality of turns. The first bobbin 121 also comprises a first insert 123 positioned at least partially within the turns. The first insert 123 is made of ferromagnetic material, preferably steel. Thanks to the magnetic permeability value of the first insert 123 it is possible to reach high magnetic field values with a low amperage value circulating within the first bobbin 121. The first bobbin 121 is external to the conduit 60. The first insert 123 is in contact with the fluid. Appropriately, the first insert 123 crosses a wall of the conduit 60 and projects internally to the conduit 60 to come into contact with the fluid.

The first insert 123 skims the fluid along said conduit 60. The first insert 123 is positioned in a first zone of the conduit 60.

The means 12 for generating a magnetic field for exciting the magnetorheological fluid comprises a second bobbin 122 that, in turn, comprises a plurality of turns and a second insert 124 positioned at least partially within the turns. Appropriately, the second insert 124 is ferromagnetic. It also skims the fluid along said conduit 60. The second insert 124 therefore comes into contact with the fluid.

Advantageously, the conduit 60 comprises at least a wall with a first hole that is crossed by the first insert 123. At least at such first hole, the conduit 60 is made of diamagnetic or paramagnetic material.

Appropriately, also the second insert 124 crosses a wall that delimits the conduit 60 (advantageously, but not necessarily, the same wall crossed by the first insert 123).

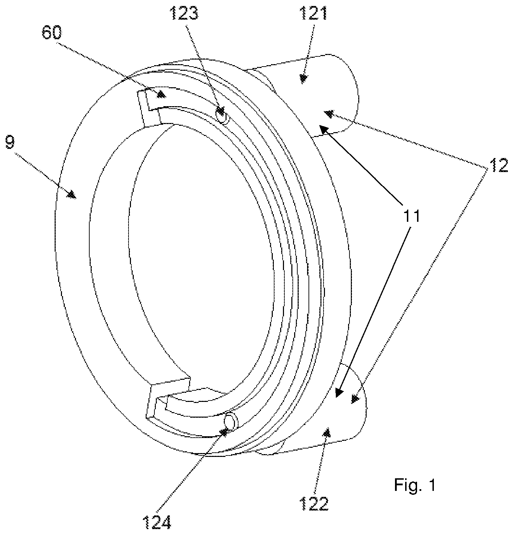

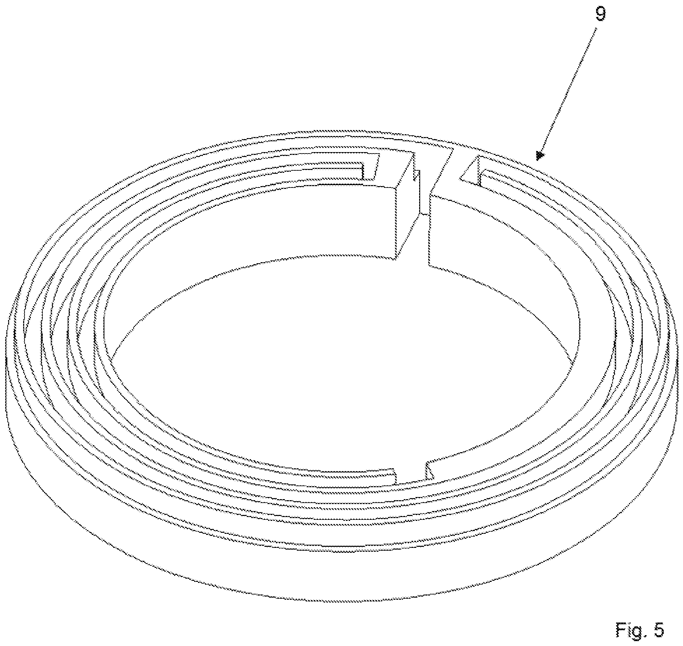

As exemplified in figure 1 or 5, the conduit 60 comprises an annular component in which a groove is afforded in which the operating fluid flows (known in the technical sector as "inertia track"). The first and/or the second inserts 123, 124 cross such component.

The above-indicated measures allow the magnetic field to be concentrated. In proximity to the first insert 123 (and the second insert 124 and all the other inserts if present) the magnetorheological fluid becomes thicker, increasing the average viscosity value of the fluid and changing the dynamic behaviour of the hydraulic mounts.

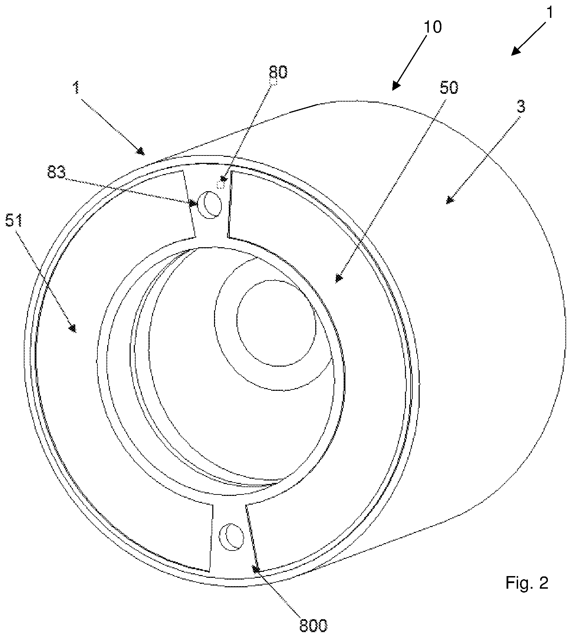

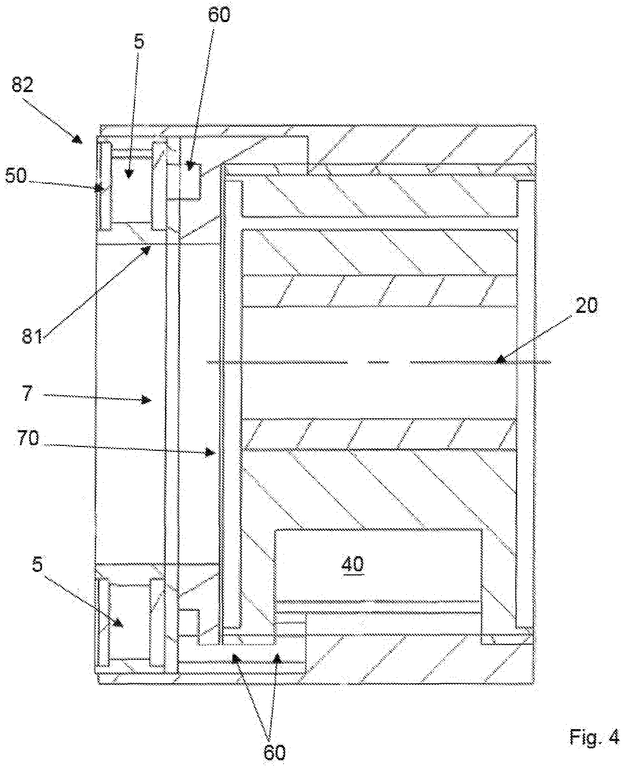

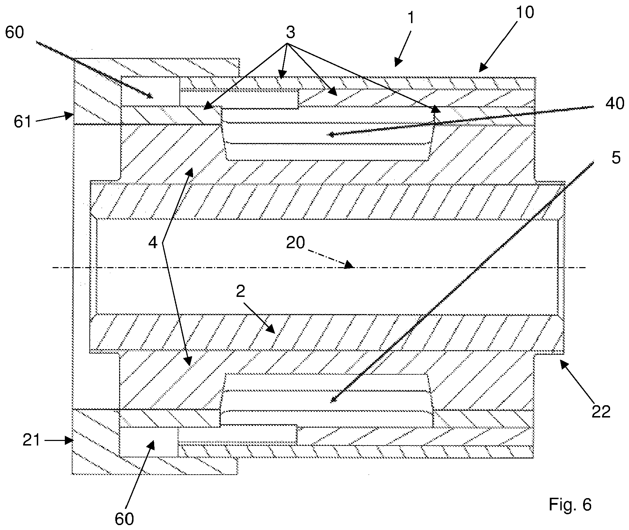

In figures 2-6 the generating means 12 is not explicitly illustrated, but has been omitted for simplicity (it could be positioned as in figure 1 or project outwards into the left part of figures 4 and 6).

The mount 1 is advantageously a damping bushing 10. The bushing 10 comprises a first element 2 (which is a sleeve or a shaft), a second element 3 (which is a sleeve) enclosing the first element 2 and an elastomeric body 4 interposed between the first and the second element 2, 3. The elastomeric body 4 is radially interposed between the first and the second element 2, 3. Appropriately, the elastomeric body 4 is in contact both with the first and the second element 2, 3, It is advantageously made of rubber, preferably vulcanized. As exemplified in the accompanying figures, the elastomeric body 4 is in turn a hollow element that encloses the first element 2 about a longitudinal axis of the latter. The first and the second element 2, 3 have mutually parallel longitudinal axes of extension. The first and the second elements 2, 3 are advantageously made of metal material. The first chamber 40 is at least in part delimited by the elastomeric body 4. In particular, the first chamber 40 is defined by a concavity afforded internally to the elastomeric body 4. The first chamber 40 is defined by the combination of the elastomeric body 4 and the second element 3.

The conduit 60 preferably extends according to a curved path. The conduit 60 optionally comprises at least one spiralling section. Appropriately the various turns are coplanar. In an alternative solution, the conduit comprises a labyrinth-shaped path in which several arches (in communication with one another) follow on inside one another. Advantageously, such arches are concentric and/or coplanar. The above-indicated measures allow the path to be extended, while however limiting the dimensions.

Reference is to be made to a solution illustrated in figures 2, 3, 4.

The second chamber 5 is not in contact with said elastomeric body 4. In particular, the second chamber 5 is delimited at least in part by a flexible membrane 50. In fact, the second chamber 5 is a flexible chamber in which the flexible membrane 50 moves to compensate the movement of the incompressible fluid. Appropriately, the second chamber 5 is annular. The second expansion chamber 5 encloses a compartment 7. The bushing 1 comprises a bottom 70 of such compartment 7 which is interposed between the compartment 7 itself and the elastomeric body 4. The bottom 70 therefore separates the compartment 7 and the elastomeric body 4.

Advantageously, the flexible membrane 50 separates the second chamber 5 from an external zone to the bushing 1 in which there is air at atmospheric pressure.

Appropriately, a hollow space 43 not affected by the incompressible fluid is interposed between the first and the second element 2, 3. Advantageously, the hollow space 43 is interposed between the elastomeric body 4 and the second element 3. The body 4 delimits the hollow space 43 at least in part. Such hollow space 43 is diametrically opposed to the first chamber 40 with respect to the first element 2.

The elastomeric body 4 comprises a first portion 41 and a projection 42 that projects in a cantilever fashion towards the first portion 41. The first portion 41 extends perimetrally lying against the second element 3. The hollow space 43 extends between the first portion 41 and the projection 42. Preferably, the hollow space 43 encloses the projection 42 on three sides.

In the absence of external forces acting on the bushing 10, the first element 2 is eccentric with respect to the second element 3.

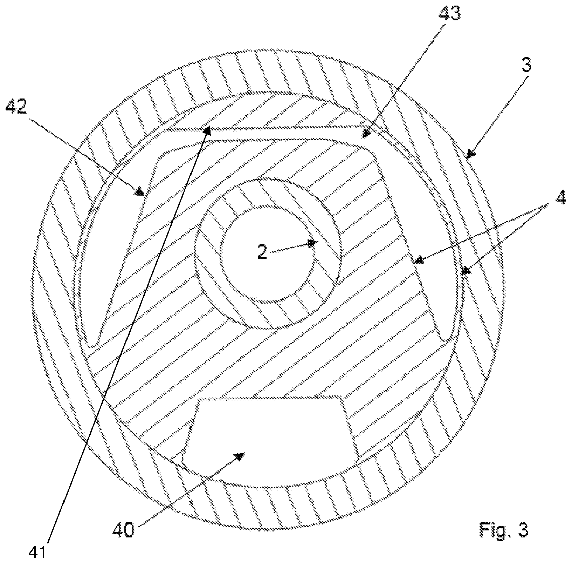

In fact, since the elastomeric body 4 does not contribute to defining the second chamber 5, the first element 2 can be positioned eccentrically in the absence of external forces on the bushing 1. In fact, with reference to figure 3 the first element 2 will have space to move upwards and will be able to do so without compressing the second chamber 5. This allows a soft bushing 10 to be obtained in static conditions. Once associated with the masses to be dampened, the first and the second element 2, 3 become coaxial (in static conditions).

The radial movement of the second element 3 with respect to said first element 2 alternatively pumps the fluid from the first chamber 40 towards the second chamber 5 and recalls by depression the fluid from the second chamber 5 towards the first chamber 40. The second chamber 5 collects the incompressible fluid, but does not exert a pumping or suction force, or, even so, such action is certainly lower with respect to that of the first chamber 40. The fluid acts as a resonance element and allows an increase in rigidity at a predetermined frequency range of the oscillations to be dampened.

The second chamber 5 extends radially between an internal annular edge 81 and an external annular edge 82. The bushing 1 comprises a metal flap 80 that extends radially and connects the internal annular edge 81 and the external annular edge 82. The flap 80 comprises a hole 83 for the introduction of the incompressible fluid into the second chamber 5. An obturator (preferably irremovable) obstructs the hole 83. In order to introduce the incompressible fluid, a vacuum is first generated within the second chamber 5 and the first chamber 40. At this point, the incompressible fluid is introduced and then everything is closed (e.g. by forcing the obturator into the hole 83). Such obturator is preferably a metal plug inserted by interference into the hole 83. Advantageously, the bushing 1 comprises an additional flexible membrane 51 that delimits the expansion chamber 5. As can be noted in figure 2, the membrane 50 and the additional membrane 51 delimit a same face of the expansion chamber 5. The membrane 50 and the additional membrane 51 in the exemplified solution illustrated extend like two arches. They are separated by the flap 80 previously described and appropriately also by an additional flap 800. The membrane 50 and/or the additional membrane 51 are free to move according to the pressure in the expansion chamber 5.

Reference is now made to an alternative solution illustrated in figure 6.

The elastomeric body 4 in that case delimits at least partially the first and the second chamber 40, 5. The first element 2 extends along a longitudinal axis 20. The bushing 10 along a direction identified by said longitudinal axis 20 extends between a first and a second end 21, 22. The minimum axial distance between the conduit 60 and the first end 21 is shorter by 1/5 of the length of the entire mount 1 measured along said longitudinal axis 20. The conduit 60 is therefore in proximity to an end of the first element 2 so as to be able to be easily accessible in order to facilitate the insertion of the magnetorheological fluid. Furthermore, this facilitates the housing of the means 12 for generating a magnetic field, minimizing its dimensions.

The conduit 60 in the preferred solution is delimited by a plug 61 located at an axial end of the conduit 60. The plug 61 further comprises a hole for access to the inside of said conduit 60, said hole being occluded by an irremovable obturator. Such hole allows the suction of the air present in the conduit 60 and the introduction of the magnetorheological fluid.

Subsequently, the hole is occluded by the irremovable plug.

The invention as it is conceived enables achieving multiple advantages. First of all, it allows the active control of the mount as a function of specific commands from a control unit (e.g. a vehicle control unit). This allows active control that is variable over time, for adapting to specific situations.

Acting on the viscosity of the fluid rather than on the inertia track 60 has the advantage of increasing the dynamic rigidity modulus without changing its shape and without varying the characteristic resonance frequency of the mount. Furthermore, in this way, the use of electromagnetic parts is avoided, with the advantage of increasing the strength of the final product.

The invention as it is conceived is susceptible to numerous modifications, all falling within the scope of the appended claims.

Further, all the details can be replaced with other technically-equivalent elements. In practice, all the materials used, as well as the dimensions, can be any according to requirements.

## Claims

1. A mount for damping oscillations, comprising:
- a first chamber (40) that is deformable by action of said oscillations;
- a second chamber (5);
- a conduit (60) that sets the first and the second chamber (40, 5) into communication;
- an incompressible fluid suitable for moving between the first and the second chamber (40, 5) through said conduit (60);said fluid being a magnetorheological fluid;
said mount (1) comprising regulating means (11) for regulating the dynamic behaviour of the mount and that, in turn, comprises means (12) for generating a magnetic field for exciting the magnetorheological fluid; the means (12) for generating a magnetic field for exciting the magnetorheological fluid comprises a first bobbin (121) that, in turn, comprises a plurality of turns; the first bobbin (121) also comprising a first ferromagnetic insert (123) positioned at least partially within the turns;
**characterised in that** the first bobbin (121) is external to the conduit (60); the first insert (123) crosses a wall of the conduit (60) and projects internally to the conduit (60) to come into contact with the fluid.

2. The mount according to claim 1, **characterized in that** the means (12) for generating a magnetic field for exciting the magnetorheological fluid comprises a second bobbin (122) external to said conduit (60) and in turn comprising:
- a plurality of turns;
- a second ferromagnetic insert (124) positioned at least partially within the turns and that skims the fluid along said conduit (60).

3. The mount according to any one of the preceding claims, **characterized in that** said conduit (60) is at least partly made of a diamagnetic or paramagnetic material.

4. The mount according to any one of the preceding claims, **characterized in that** said conduit (60) is at least partly made of a plastic material or an aluminium alloy.

5. The mount according to any one of the preceding claims, **characterized in that** the conduit (60) comprises at least a wall with a first hole that is crossed by the first insert (123); at least at such first hole, the conduit (60) is made of diamagnetic or paramagnetic material.

6. The mount according to any one of the preceding claims, **characterized in that** it is a damping bushing (10) comprising a first element (2), a second element (3) enclosing the first element (2) and an elastomeric body (4) interposed between the first and the second element (2, 3), said first element (2) being a sleeve or a shaft, said second element (3) being a sleeve; said first chamber (40) being at least partly delimited by said elastomeric body (4).

7. The mount according to claim 6, **characterized in that** the second chamber (5) is delimited at least partly by a flexible membrane (50) that is not in contact with said elastomeric body (4), a hollow space (43) unaffected by the incompressible fluid being interposed between the first and the second element (2, 3), said hollow space (43) being diametrically opposed to the first chamber (40) with respect to the first element (2), and in the absence of external forces acting upon the bushing (10), the first element (2) being eccentric with respect to the second element (3).

8. The mount according to claim 6, **characterized in that** said elastomeric body (4) at least partly delimits the first and the second chamber (40, 5), the bushing (10) extending along a longitudinal axis (20) between a first and a second end (21, 22), and the minimum distance between said conduit (60) and said first end (21) being less than 1/5 of the length of the entire bushing (10) as measured along said longitudinal axis (20).

9. The mount according to claim 8, **characterized in that** said conduit (60) is at least partly delimited by a plug (61) located at the first end (21) and that extends transversely to said longitudinal axis (20), the plug (61) comprising a hole for access to the inside of said conduit (60), said hole being occluded by an irremovable obturator.

## Patentansprüche

1. Halterung zur Dämpfung von Schwingungen, umfassend:
- eine erste Kammer (40), die durch Einwirkung der Schwingungen verformbar ist;
- eine zweite Kammer (5);
- eine Leitung (60), die die erste und die zweite Kammer (40, 5) in Kommunikation bringt;
- ein inkompressibles Fluid, das geeignet ist, um sich zwischen der ersten und der zweiten Kammer (40, 5) durch die Leitung (60) zu bewegen; wobei das Fluid ein magnetorheologisches Fluid ist;
wobei die Halterung (1) Regelmittel (11) zum Regulieren des dynamischen Verhaltens der Halterung umfasst und die wiederum Mittel (12) zum Erzeugen eines Magnetfelds zum Erregen des magnetorheologischen Fluids umfasst;
das Mittel (12) zum Erzeugen eines Magnetfeldes zum Anregen des magnetorheologischen Fluids umfasst eine erste Spule (121), die wiederum eine Vielzahl an Windungen umfasst; wobei die erste Spule (121) auch einen ersten ferromagnetischen Einsatz (123) umfasst, der zumindest teilweise innerhalb der Windungen positioniert ist;
**dadurch gekennzeichnet, dass** sich die erste Spule (121) außerhalb der Leitung (60) befindet; der erste Einsatz (123) kreuzt eine Wand der Leitung (60) und ragt nach innen in die Leitung (60) hinein, um mit dem Fluid in Kontakt zu kommen.

2. Halterung nach Anspruch 1, **dadurch gekennzeichnet, dass** das Mittel (12) zum Erzeugen eines Magnetfeldes zum Anregen des magnetorheologischen Fluids eine zweite Spule (122) außerhalb der Leitung (60) umfasst und wiederum umfassend:
- eine Vielzahl an Windungen;
- einen zweiten ferromagnetischen Einsatz (124), der zumindest teilweise innerhalb der Windungen positioniert ist und der das Fluid entlang der Leitung (60) abschöpft.

3. Halterung nach einem der vorhergehenden Ansprüche, **dadurch gekennzeichnet ist, dass** die Leitung (60) zumindest teilweise aus einem diamagnetischen oder paramagnetischen Material besteht.

4. Halterung nach einem der vorhergehenden Ansprüche, **dadurch gekennzeichnet, dass** die Leitung (60) zumindest teilweise aus einem Kunststoffmaterial oder einer Aluminiumlegierung besteht.

5. Halterung nach einem der vorhergehenden Ansprüche, **dadurch gekennzeichnet, dass** die Leitung (60) mindestens eine Wand mit einem ersten Loch umfasst, das von dem ersten Einsatz (123) gekreuzt wird; zumindest an einem solchen ersten Loch besteht die Leitung (60) aus diamagnetischem oder paramagnetischem Material.

6. Halterung nach einem der vorhergehenden Ansprüche, **dadurch gekennzeichnet, dass** sie eine Dämpfungsbuchse (10) ist, die ein erstes Element (2), ein zweites Element (3), das das erste Element (2) umschließt, und einen Elastomerkörper (4) umfasst, der zwischen dem ersten und dem zweiten Element (2, 3) angeordnet ist, wobei das erste Element (2) eine Hülse oder eine Welle ist, wobei das zweite Element (3) eine Hülse ist; wobei die erste Kammer (40) zumindest teilweise durch den Elastomerkörper (4) begrenzt ist.

7. Halterung nach Anspruch 6, **dadurch gekennzeichnet, dass** die zweite Kammer (5) zumindest teilweise durch eine flexible Membran (50) begrenzt ist, die nicht mit dem Elastomerkörper (4) in Kontakt steht, wobei ein Hohlraum (43), der durch das inkompressible Fluid nicht beeinflusst wird, zwischen dem ersten und dem zweiten Element (2, 3) angeordnet ist, wobei der Hohlraum (43) der ersten Kammer (40) in Bezug auf das erste Element (2) diametral gegenüberliegt, wobei das erste Element (2) in Abwesenheit von äußeren Kräfte, die auf die Buchse (10) einwirken, in Bezug auf das zweite Element (3) exzentrisch ist.

8. Halterung nach Anspruch 6, **dadurch gekennzeichnet, dass** der Elastomerkörper (4) die erste und die zweite Kammer (40, 5) zumindest teilweise begrenzt, wobei sich die Buchse (10) entlang einer Längsachse (20) zwischen einem ersten und einem zweiten Ende (21, 22) erstreckt und der Mindestabstand zwischen der Leitung (60) und dem ersten Ende (21) beträgt weniger als 1/5 der Länge der gesamten Buchse (10), gemessen entlang der Längsachse (20).

9. Halterung nach Anspruch 8, **dadurch gekennzeichnet, dass** die Leitung (60) zumindest teilweise durch einen sich am ersten Ende (21) befindlichen Stopfen (61) begrenzt ist und sich quer zur Längsachse (20) erstreckt, wobei der Stopfen (61) ein Loch für den Zugang zur Innenseite der Leitung (60) umfasst, wobei das Loch von einem nicht entfernbaren Verschluss verschlossen ist.

## Revendications

1. Support permettant d'amortir des oscillations, comprenant :
- une première chambre (40) étant déformable sous l'action desdites oscillations ;
- une seconde chambre (5) ;
- un conduit (60) mettant en communication la première et la seconde chambre (40, 5) ;
- un fluide incompressible adapté pour se déplacer entre la première et la seconde chambre (40, 5) à travers ledit conduit (60) ; ledit fluide étant un fluide magnétorhéologique ;
ledit support (1) comprenant des moyens de réglage (11) pour régler le comportement dynamique du support et qui, à leur tour, comprennent des moyens (12) servant à générer un champ magnétique pour exciter le fluide magnétorhéologique ;
les moyens (12) servant à générer un champ magnétique pour exciter le fluide magnétorhéologique comprennent une première bobine (121) qui, à son tour, comprend une pluralité de spires ; la première bobine (121) comprenant aussi un premier insert ferromagnétique (123) positionné au moins partiellement à l'intérieur des spires ;
**caractérisé en ce que** la première bobine (121) est extérieure au conduit (60) ; le premier insert (123) traverse une paroi du conduit (60) et dépasse à l'intérieur du conduit (60) pour entrer en contact avec le fluide.

2. Support selon la revendication 1, **caractérisé en ce que** les moyens (12) servant à générer un champ magnétique pour exciter le fluide magnétorhéologique comprend une seconde bobine (122) extérieure au dit conduit (60) et comprenant à son tour :
- une pluralité de spires ;
- un second insert ferromagnétique (124) positionné au moins partiellement à l'intérieur des spires et qui écumera le fluide le long dudit conduit (60).

3. Support selon l'une quelconque des revendications précédentes, **caractérisé en ce que** ledit conduit (60) est au moins partiellement constitué d'un matériau diamagnétique ou paramagnétique.

4. Support selon l'une quelconque des revendications précédentes, **caractérisé en ce que** ledit conduit (60) est au moins partiellement constitué d'un matériau plastique ou d'un alliage d'aluminium.

5. Support selon l'une quelconque des revendications précédentes, **caractérisé en ce que** le conduit (60) comprend au moins une paroi avec un premier orifice étant traversé par le premier insert (123) ; le conduit (60) est constitué d'un matériau diamagnétique ou paramagnétique, au moins en correspondance de ce premier orifice.

6. Support selon l'une quelconque des revendications précédentes, **caractérisé en ce qu'**il s'agit d'une douille d'amortissement (10) comprenant un premier élément (2), un second élément (3) entourant le premier élément (2) et un corps élastomère (4) interposé entre le premier et le second élément (2, 3), ledit premier élément (2) étant un manchon ou un arbre, ledit second élément (3) étant un manchon ; ladite première chambre (40) étant au moins partiellement délimitée par ledit corps élastomère (4).

7. Support selon la revendication 6, **caractérisé en ce que** la seconde chambre (5) est délimitée au moins partiellement par une membrane flexible (50) n'étant pas en contact avec ledit corps élastomère (4), un espace creux (43) non affecté par le fluide incompressible étant interposé entre le premier et le second élément (2, 3), ledit espace creux (43) étant diamétralement opposé à la première chambre (40) par rapport au premier élément (2) et, en l'absence de forces externes agissant sur la douille (10), le premier élément (2) étant excentré par rapport au second élément (3).

8. Support selon la revendication 6, **caractérisé en ce que** ledit corps élastomère (4) délimite au moins partiellement la première et la seconde chambre (40, 5), la douille (10) se prolongeant le long d'un axe longitudinal (20) entre une première et une seconde extrémité (21, 22), et la distance minimale entre ledit conduit (60) et ladite première extrémité (21) étant inférieure à 1/5 de la longueur de la douille (10) entière telle que mesurée le long dudit axe longitudinal (20).

9. Support selon la revendication 8, **caractérisé en ce que** ledit conduit (60) est au moins partiellement délimité par un bouchon (61) situé en correspondance de la première extrémité (21) et qui se prolonge transversalement au dit axe longitudinal (20), le bouchon (61) comprenant un orifice pour l'accès à l'intérieur dudit conduit (60), ledit orifice étant obturé par un obturateur inamovible.
